# EUROPEAN PATENT SPECIFICATION

(11) **EP 3 993 383 B1**
(45) Date of publication and mention of the grant of the patent: **18.11.2026**
(21) Application number: 20833595.0
(22) Date of filing: 15.05.2020
(51) Int. Cl.: H04N 5/20, H04N 9/64, G06T 5/00

(54) **METHOD AND DEVICE FOR ADJUSTING IMAGE QUALITY, AND READABLE STORAGE MEDIUM**
VERFAHREN UND VORRICHTUNG ZUR ANPASSUNG DER BILDQUALITÄT UND LESBARES SPEICHERMEDIUM
PROCÉDÉ ET DISPOSITIF DE RÉGLAGE DE QUALITÉ D'IMAGE AINSI QUE SUPPORT D'INFORMATIONS LISIBLE

(30) Priority: 27.06.2019 CN 201910569860
(43) Date of publication of application: 04.05.2022
(73) Proprietor: Maxell, Ltd., Kyoto 618-8525 (JP)
(72) Inventor: XIA, Daxue, Hong Kong Cooperation Zone,No.1 Liyumen Street, Qianwan Road1 Shenzhen, Guangdong 518054 (CN); HE, Linjun, Hong Kong Cooperation Zone,No.1 Liyumen Street, Qianwan Road1 Shenzhen, Guangdong 518054 (CN); XIE, Renli, Hong Kong Cooperation Zone,No.1 Liyumen Street, Qianwan Road1 Shenzhen, Guangdong 518054 (CN)
(74) Representative: Mewburn Ellis LLP
(86) International application number: PCT/CN2020/090597
(87) International publication number: WO 2020/259123

(56) References cited:
- CN-A- 103 778 599
- CN-A- 109 272 459
- CN-A- 109 272 459
- US-A1- 2012 114 267
- US-A1- 2016 358 584
- US-B2- 10 176 561

## Description

### BACKGROUND OF DISCLOSURE

### 1. Field of Invention

The present disclosure relates to the field of image communication, and more particularly, to a method, device, and readable storage medium for adjusting image quality.

### 2. Description of Prior Art

High dynamic range (HDR) imaging is an image displaying technology emerging in recent years. Compared with normal imaging technologies, the HDR imaging technology can provide more dynamic ranges and image details and better reflect visual effects of real environments. The HDR imaging technology may meet users' demands for viewing experience of watching high-quality movies and TVs. However, the existing HDR technologies cannot fully satisfy users' demands for colorful and exquisite images with great sense of level, because different users have different concerns or areas of interest for different scenes or images. Unfortunately, the existing HDR technologies adjust images mechanically, not intelligently according to different environments or scenes.

Document 1 (CN109272459) discloses an image processing method that includes acquiring an image in a chrominance-luminance separation color mode; performing scene recognition of the image to determine a scene of the image; traversing luminance components of respective pixel points in the image, and generating a luminance distribution of the image according to a traversing result of the luminance components; generating a luminance mapping relation based on a standard luminance distribution corresponding to the scene of the image and the luminance distribution of the image; and adjusting the luminance components of the respective pixel points in the image according to the luminance mapping relation to generate a first processed image.

Document 2 (US 20120114267) discloses a method of enhancing contrast of an image by using a Bezier curve. Histogram distribution is calculated based on an image that has been photographed or read out from a storage medium, the type of the image is determined according to the contrast state of the image, the movement directions of control points of a 3-D Bezier curve is determined according to the type of the image, and the movement distances of the control points of the 3-D Bezier curve are calculated based on the number of luminance values of the histogram distribution. Two control points of the 3-D Bezier curve are moved based on the movement directions and the movement distances of the control points, and the 3-D Bezier curve is created by using the two moved control points and two fixed control points. The contrast of the image is enhanced by applying the Bezier curve. However, neither Document 1 nor Document 2 disclose applying a fifth-order Bezier curve to enhance image quality.

Therefore, current technologies still require improving and developing.

### SUMMARY OF INVENTION

The invention is set forth in the independent claims 1 and 4. In view of the above-mentioned shortcomings of the prior arts, the present disclosure provides a method for intelligently adjusting image quality that can adjust a current display image to partially enhance image quality according to personal interests.

The technical solution used in the present application to solve the above technical problems is detailed in the following:
A method for adjusting image picture quality for a display device to intelligently enhance regional display quality, comprising the steps performed by a processor of:
selecting by a display device system a focus area of a target image;
using a fifth-order linear Bézier curve to determine a mapping relationship curve of input luminance values and output luminance values of pixels of the target image (S200);
wherein the fifth-order linear Bezier curve is described as $Lt = Ltmax \times ΣC \left(N, k\right) \times L {0}^{∧} k \times {\left(1-L0\right)}^{∧} \left(N-k\right) \times pk ,$
wherein C(N,k) is a binominal coefficient indicating permutations of k elements among N with N = 5 elements, Ltmax represents a maximum output luminance supported by the display device system, L0 represents a ratio of the input luminance value to a maximum input luminance value, k iterates from 1 to 5, and pk represents a sequence of coefficients, wherein with initial coefficients being pk=k/5 five equal intervals 0 to p1, p1 to p2, p2 to p3, p3 to p4 and p4 to p5 are defined,
calculating an input luminance value range of pixels in the focus area of the target image and determining an upper limit value and a lower limit value of the input luminance range;
determining an upper initial coefficient of an interval of the five equal intervals, in which is the upper limit value, as an upper edge coefficient and a lower initial coefficient of an interval of the five equal intervals, in which is the lower limit value, as a lower edge coefficient;
scaling up the upper edge coefficient to obtain a new upper edge coefficient by multiplying the upper edge coefficient with an adjustment factor and scaling down the lower edge coefficient to obtain a new lower edge coefficient by dividing the lower edge coefficient with the scaling factor;
adjusting the pixels in the focus area of the target image by applying the fifth-order linear Bezier curve with the new lower and upper edge coefficients to map the input luminance values of the focus area of the target image with the output luminance values.

As a further improved technical solution, the focus area of the target image selected by the display device system is a central area in an image display of the target image.

As a further improved technical solution, when resolution of a current image is 3840×2160, the pixels in the corner areas of the selected central area are generally located in pixel ranges 1600<x<2260 and 900 < y < 1260, where x is the coordinate in the length direction of the image, y is the coordinate in the width direction of the image, and the origin of coordinates of the image display is at the upper left corner.

As a further improved technical solution, the focus area of the target image selected by the display device system is an image of interest.

As a further improved technical solution, the image area of interest is obtained through artificial intelligence training.

As another further improved technical solution, the image area of interest is an image area that is recognized through big data collection.

As another further improved technical solution, the outputting the mapping relationship curve of the input luminance value and the output luminance value of the target image comprises calculating using a linear Bézier curve to initially describe the mapping relationship curve of the input luminance value and the output luminance value.

As another further improved technical solution, the calculating the input luminance value range of the pixels in the focus area of the target image and proportionally adjusting the upper and lower edge coefficients of the input luminance value range to obtain the new upper and lower edge coefficients comprises:
determining an upper limit value and a lower limit value of a Bézier curve of a ratio of the input luminance value and a maximum input luminance value of the pixels in the focus area of the target image; and
proportionally scaling up or down interval upper and lower edge coefficients which are determined according to an upper limit value and the lower limit value to obtain the new upper and lower edge coefficients.

As another further improved technical solution, the linear Bézier curve is implemented by a fifth-order linear Bézier curve.

As another further improved technical solution, the 5th-order linear Bézier curve is described as Lt=Ltmax×ΣC(N,k)×L0^k×(1-L0)^(N-k)×pk, wherein C(N,k) indicates permutations of k elements among N (N=5) elements, Ltmax represents a maximum output luminance supported by a current display device, L0 represents a ratio of the input luminance value to the maximum input luminance value, k iterates from 1 to 5, and pk represents a sequence of coefficients, initially, pk = k/5, the input is correlated with the output in a linear relationship, and the luminance ratio L0 is divided into five equal intervals.

As another further improved technical solution, the interval upper and lower edge coefficients are scaled up or down proportionally based on an adjustment factor which is selected based on conditions of images.

As another further improved technical solution, by applying the above adjusted upper and lower edge coefficients to the mapping relationship between the input luminance and the output luminance of the focus area of the image expressed by the fifth-order linear Bézier curve, luminance and contrast of the image can be adjusted in real-time.

As another further improved technical solution, the image area that is recognized through the artificial intelligence training or the big data collection is customized by a user according to specific requirements for image recognition.

The present application also provides a device for adjusting image quality that comprises a processor and a memory communicatively connected to the processor. The memory stores a computer program, and the computer program is executed by the processor to perform the steps of the above method.

The processor is configured to call the computer program in the memory to perform the steps of the method for adjusting image quality.

The present application further provides a readable storage medium. The readable storage medium stores a program for adjusting image quality. The program for adjusting image quality, when being executed by a processor, realizes the steps of the method for adjusting image quality.

Compared with current HDR image quality adjustment technologies, the present disclosure uses artificial intelligence technologies to set an image area that a user is interested in as the focus area of the target image, to represent the input luminance value range of the pixels in the focus area of the target image using a linear Bézier curve, and to scale up or down the contrast level of the image through adjusting the order of the linear Bézier curve or changing the adjustment factor for the upper and lower edge coefficients of the input luminance value range. The linear Bézier curve is utilized to ensure smoothness and continuity in luminance adjustment and also ensure coherence of image display after the image adjustment. By improving the contrast level of the specific area of the image, the image quality becomes brighter and more colorful. The method is simple while can meet the requirements of real-time adjustment, and does not require additional hardware, reducing the cost.

### BRIEF DESCRIPTION OF DRAWINGS

Detailed description of the embodiments of the present application is given in the following with accompanying drawings.
FIG. 1 is a flow chart of a method for adjusting image quality according to a preferred embodiment of the present disclosure;
FIG. 2 is a schematic structure diagram of a device for adjusting image quality according to a preferred embodiment of the present disclosure;
FIG. 3-1 is an example 1 of an original image without image quality adjustment using a method of adjusting image quality of the present disclosure;
FIG. 3-2 is an example 2 of an image which is obtained from the image of FIG. 3-1 adjusted using a method of adjusting image quality of the present disclosure;
FIG. 4-1 is an example 3 of an original image without image quality adjustment using a method of adjusting the image quality of the present disclosure; and
FIG. 4-2 is an example 4 of an image which is obtained from the image of FIG. 4-1 adjusted using a method of adjusting image quality of the present disclosure.

### DETAILED DESCRIPTION OF PREFERRED EMBODIMENTS

To make the object, technical solution, and advantages of the present disclosure clearer and more comprehensible, the present disclosure is described in further detail hereinafter with reference to the accompanying drawings and by way of example. It should be understood that the specific embodiments described herein are intended only to explain not limit the present disclosure.

The present disclosure provides an image recognition technology using artificial intelligence to adjust a specific area of an image according to the features recognized by the artificial intelligence, thereby enhancing exquisiteness and sense of organization of a part of the image and improving the image quality. For example, in an application where image quality of movies or TV is enhanced, a certain portion of an image needs to be emphasized, or in the criminal investigation of the police, a portrait of one person needs to be partially highlighted. For these specific application environments requiring image quality enhancement, users may perform a setting operation on some specific images of interest in advance. The setting operation can be achieved through big data or artificial intelligence in the related art. Then, image display of the specific images can be enhanced through the method of the present disclosure during video playback or image browsing, so as to achieve the purpose of intelligently enhancing image quality of a specific area.

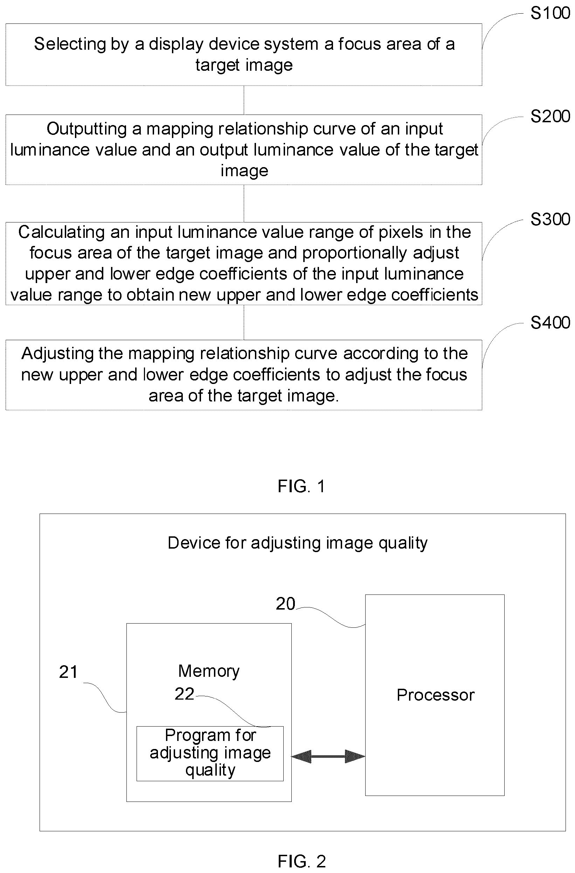

FIG. 1 is a flow chart of a method for adjusting image quality according to a preferred embodiment of the present disclosure. As shown in FIG. 1, the method of the preferred embodiment comprises the following steps:
Step 100: selecting by a display device system a focus area of an image.

Specifically, the focus area of the image selected by the display device system is the central area or an image area of interest in image display of the image. The adjustment of the image quality mainly comprises adjusting the luminance and the contrast level. The image area of interest in the technical solution of the present disclosure is an image area that is recognized through artificial intelligence training or big data collection. For example, in a certain image, the central area of the image display generally serves as the focus area of the image. When the resolution of the current image is 3840×2160, the pixels in the corner areas of the selected central area are generally located in pixel ranges 1600<x<2260 and 900 < y < 1260, where x is the coordinate in the length direction of the image, y is the coordinate in the width direction of the image, and the origin of coordinates of the image display is at the upper left corner. Of course, the central area of the image display here is only an example. Any modification can be appropriately performed in the range according to the resolution of the image display, so that the central area is suitable for images with different resolutions. In addition, the image area of interest can be set by means of artificial intelligence training or collected big data. For example, in the field of the criminal investigation of the police, facial features can be extracted and learned as the basis for subsequent image adjustments. The schemes and methods of artificial intelligence learning belong to state of the art technology, and are not repeated here.

Step S200: outputting a mapping relationship curve of an input luminance value and an output luminance value of the target image.

Specifically, the step of outputting the mapping relationship curve of the input luminance value and the output luminance value of the target image is performed by calculating using a linear Bézier curve to initially describe the mapping relationship curve of the input luminance value and the output luminance value.

In the technical solution of the present disclosure, the linear Bézier curve is implemented by a fifth-order linear Bézier curve. Of course, the order of the linear Bézier curve can be selected based on requirements, which can be determined according to different conditions of the image. For example, the 5th-order linear Bézier curve is described as Lt=Ltmax×ΣC(N,k)×L0^k×(1-L0)^(N-k)×pk, wherein C(N,k) indicates permutations of k elements among N (N=5) elements, Ltmax represents the maximum output luminance supported by a current display device, L0 represents a ratio of the input luminance value to the maximum input luminance value, k iterates from 1 to 5, and pk represents the sequence of coefficients, initially, pk = k/5. There is a linear relationship between the input and the output, and the luminance ratio L0 is divided into five equal intervals.

Step S300: calculating the input luminance value range of the pixels in the focus area of the target image and proportionally adjusting the upper and lower edge coefficients of the input luminance value range to obtain new upper and lower edge coefficients.

Specifically, the step of calculating the input luminance value range of the pixels in the focus area of the target image and proportionally scaling up or down the upper and lower edge coefficients of the input luminance value range to obtain new upper and lower edge coefficients comprise the following steps:
determining an upper limit value and a lower limit value of the Bézier curve of the ratio of the input luminance value and the maximum input luminance value of the pixels in the focus area of the target image, and
proportionally scaling up or down interval upper and lower edge coefficients which are determined according to the upper limit value and the lower limit value to obtain the new upper and lower edge coefficients.

For example, an input luminance range L1<=L0<=L2 of the focus area of the image is obtained statistically, and then it is determined that L1 and L2 are in the five equal intervals determined in Step S200, wherein it is assumed that L1 and L2 are set as: 1/5<=L1<=2/5, 2/5<=L2<=3/5. The interval upper and lower edge coefficients determined by L1 and L2 are scaled up or down proportionally according to a scale (referred to as adjustment factor) to obtain new upper and lower edge coefficients. In this example, L1 corresponds to a lower limit coefficient P1, and L2 corresponds to an upper limit coefficient P3. It is assumed that the adjustment factor is set as 1.2. Scaling down P1 by the factor of 1.2 yields P1=0.16, and scaling up P3 by the factor of 1.2 yields P3=0.72. Accordingly, the corresponding new upper and lower edge coefficients can be obtained according to the adjustment factor.

The interval upper and lower edge coefficients are scaled up or down based on the coefficient adjustment factor that may be selected based on conditions of the image.

Step S400: adjusting the mapping relationship curve according to the new upper and lower edge coefficients to adjust the focus area of the target image.

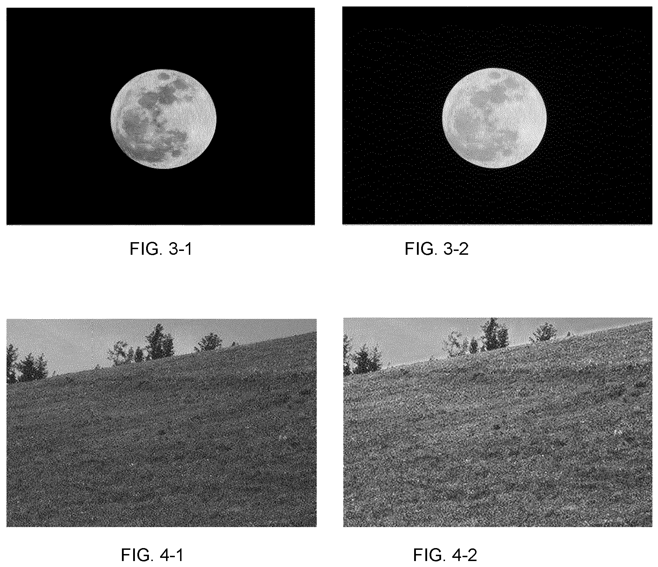

Specifically, the luminance and contrast of the image can be adjusted in real-time by applying the above adjusted upper and lower edge coefficients to the mapping relationship between the input luminance and the output luminance of the focus area of the image expressed by the fifth-order linear Bézier curve. Smooth and continuous luminance changes in the adjusted image and coherence of image display before and after the image adjustment can be obtained without inconsistent appearance, and the image quality becomes brighter and more colorful, which greatly improves the contrast level of the specific areas of the image. FIG. 3-1 and FIG. 4-1 respectively show an example 1 and an example 3 of original images without image quality adjustment using the method of adjusting image quality of the present disclosure, and FIG. 3-2 and FIG. 4-2 show an image example 2 and an example 4 of images which are obtained from the images of FIG. 3-1 and FIG. 4-1 adjusted using the method of adjusting image quality of the present disclosure, respectively. It can be seen from FIG. 3-2 that the luminance and contrast level of the lunar sphere in the middle focus position of the adjusted image become greater, and the image quality is brighter. As shown in FIG. 4-2, the luminance of the grass, sky, and trees in the adjusted image is adjusted, which induces better sense of level and brighter and more colorful image quality. Accordingly, the method of the present disclosure can significantly improve the quality of the image.

The present disclosure also provides a device for adjusting image quality. FIG. 2 shows a schematic structure diagram of a preferred embodiment of a device for adjusting image quality of the present disclosure. The device for adjusting image quality comprises a processor 20, a memory 21, and a program 22 for adjusting image quality that is stored in the memory 21 and executable by the processor 20. The program 22 for adjusting image quality is executed by the processor 20 to perform the following steps of:
selecting by a display device system a focus area of a target image;
outputting a mapping relationship curve of an input luminance value and an output luminance value of the target image;
calculating the input luminance value range of the pixels in the focus area of the target image and proportionally adjusting upper and lower edge coefficients of the input luminance value range to obtain new upper and lower edge coefficients;
adjusting the mapping relationship curve according to the new upper and lower edge coefficients, to adjust the focus area of the target image.

Other specific steps performed by the program 22 for adjusting image quality are the same as the steps in the preferred embodiment of the foregoing method and can be referred t to the steps in the preferred embodiment of the foregoing method, which is not repeated here. The effect achieved by adjusting image quality through the device can be referred to the preferred embodiment of the above method, and is not repeated here.

The processor 20 may be implemented by a central processing unit (CPU), a general-purpose processor, a digital signal processor (DSP), an application specific integrated circuit (ASIC), a field-programmable gate array (FPGA) or another programmable logic device, discrete gates or transistor logic devices, discrete hardware components, etc. The general-purpose processor may be a microprocessor, or the processor may be any conventional processor or the like.

The memory 21 may be an internal storage unit of the device for adjusting image quality, for example, a hard disk or a memory of the device for adjusting image quality. The memory 21 may also be an external storage device of the device for adjusting image quality, for example, a plug-in hard disk equipped on the device for adjusting image quality, a smart memory card (SMC), a secure digital (SD) card, a flash card, etc. Further, the memory 21 may also include both an internal storage unit and an external storage device of the device for adjusting image quality. The memory 21 is used to store the computer program and other programs and data required by the device for adjusting image quality. The memory 21 may be used further to temporarily store data that has been output or will be output.

The present disclosure also provides a readable storage medium that stores a program for adjusting image quality. When the program for adjusting image quality is executed by a processor, the program for adjusting image quality realizes the steps of the aforementioned method for adjusting image quality. The specific steps are the same as the steps of the aforementioned method for adjusting image quality, and the resulted program for adjusting image quality is also the same as that described in the preferred embodiment of the aforementioned method. The related description will not be repeated here.

## Claims

1. A method for adjusting image quality, applied in a display device system, **characterized by** comprising following steps performed by a processor:
selecting by the display device system a focus area of a target image (S100);
using a fifth-order linear Bézier curve to determine a mapping relationship curve of input luminance values and output luminance values of pixels of the target image (S200);
wherein the fifth-order linear Bezier curve is described as $Lt = Ltmax \times ΣC \left(N, k\right) \times L {0}^{∧} k \times {\left(1-L0\right)}^{∧} \left(N-k\right) \times pk ,$
wherein C(N,k) is a binominal coefficient indicating permutations of k elements among N with N = 5 elements, Ltmax represents a maximum output luminance supported by the display device system, L0 represents a ratio of the input luminance value to a maximum input luminance value, k iterates from 1 to 5, and pk represents a sequence of coefficients, wherein with initial coefficients being pk=k/5 five equal intervals 0 to p1, p1 to p2, p2 to p3, p3 to p4 and p4 to p5 are defined,
calculating an input luminance value range of pixels in the focus area of the target image and determining an upper limit value and a lower limit value of the input luminance range;
determining an upper initial coefficient of an interval of the five equal intervals, in which is the upper limit value, as an upper edge coefficient and a lower initial coefficient of an interval of the five equal intervals, in which is the lower limit value, as a lower edge coefficient;
scaling up the upper edge coefficient to obtain a new upper edge coefficient by multiplying the upper edge coefficient with an adjustment factor and scaling down the lower edge coefficient to obtain a new lower edge coefficient by dividing the lower edge coefficient with the scaling factor;
adjusting the pixels in the focus area of the target image by applying the fifth-order linear Bezier curve with the new lower and upper edge coefficients to map the input luminance values of the focus area of the target image with the output luminance values.

2. The method for adjusting image quality of claim 1, **characterized in that** the focus area of the target image selected by the display device system is a central area in an image display of the target image.

3. The method for adjusting image quality of claim 2, **characterized in that** when resolution of a current image is 3840×2160, the pixels in the central area of the target image are generally located in pixel ranges 1600<x<2260 and 900 < y < 1260, where x is the coordinate in the length direction of the image, y is the coordinate in the width direction of the image, and the origin of coordinates of the image display is at the upper left corner.

4. A device for adjusting image quality, comprising:
a processor (20) and a memory (21) communicatively connected to the processor, **characterized in that** the memory (21) stores a computer program (22), and the computer program (22), when being executed by the processor (20), performs the steps of the method in any one of claims 1 to 3,
wherein the processor (20) is configured to call the computer program (22) in the memory (21) to perform the steps of the method for adjusting image quality in any one of claims 1 to 3.

## Patentansprüche

1. Verfahren zum Anpassen einer Bildqualität, angewandt in einem Anzeigevorrichtungssystem, **dadurch gekennzeichnet, dass** es folgende, durch einen Prozessor durchgeführte, Schritte umfasst:
Auswählen eines Fokusbereichs eines Zielbilds durch das Anzeigevorrichtungssystem (S100);
Verwenden einer linearen Bézier-Kurve fünfter Ordnung, um eine Zuordnungsbeziehungskurve von Eingangsleuchtdichtewerten und Ausgangsleuchtdichtewerten von Pixeln des Zielbilds zu bestimmen (S200);
wobei die lineare Bézier-Kurve fünfter Ordnung folgendermaßen beschrieben ist $Lt = Ltmax \times ΣC \left(N, k\right) \times L {0}^{∧} k \times {\left(1-L0\right)}^{∧} \left(N-k\right) \times pk ,$
wobei C(N,k) ein Binomialkoeffizient ist, der Permutationen von k Elementen aus N bei N = 5 Elementen angibt, Ltmax für eine maximale durch das Anzeigevorrichtungssystem unterstützte Ausgangsleuchtdichte steht, L0 für ein Verhältnis des Eingangsleuchtdichtewerts zu einem maximalen Eingangsleuchtdichtewert steht, k von 1 bis 5 iteriert und pk für eine Sequenz von Koeffizienten steht, wobei bei anfänglichen Koeffizienten von pk=k/5 fünf gleiche Intervalle 0 bis p1, p1 bis p2, p2 bis p3, p3 bis p4 und p4 bis p5 definiert sind,
Berechnen eines Eingangsleuchtdichtewertebereichs von Pixeln im Fokusbereich des Zielbilds und Bestimmen eines oberen Grenzwerts und eines unteren Grenzwerts des Eingangsleuchtdichtebereichs;
Bestimmen eines oberen anfänglichen Koeffizienten eines Intervalls aus den fünf gleichen Intervallen, in dem der obere Grenzwert ist, als einen oberen Randkoeffizienten und eines unteren anfänglichen Koeffizienten eines Intervalls aus den fünf gleichen Intervallen, in dem der untere Grenzwert ist, als einen unteren Randkoeffizienten;
Hinaufskalieren des oberen Randkoeffizienten, um einen neuen oberen Randkoeffizienten zu erhalten, durch Multiplizieren des oberen Randkoeffizienten mit einem Anpassungsfaktor, und Herunterskalieren des unteren Randkoeffizienten, um einen neuen unteren Randkoeffizienten zu erhalten, durch Dividieren des unteren Randkoeffizienten mit dem Skalierungsfaktor;
Anpassen der Pixel im Fokusbereich des Zielbilds durch Anwenden der linearen Bézier-Kurve fünfter Ordnung mit dem neuen unteren bzw. oberen Randkoeffizienten, um die Eingangsleuchtdichtewerte des Fokusbereichs des Zielbilds den Ausgangsleuchtdichtewerten zuzuordnen.

2. Verfahren zum Anpassen einer Bildqualität nach Anspruch 1, **dadurch gekennzeichnet, dass** der durch das Anzeigevorrichtungssystem ausgewählte Fokusbereich des Zielbilds ein zentraler Bereich in einer Bildanzeige des Zielbilds ist.

3. Verfahren zum Anpassen einer Bildqualität nach Anspruch 2, **dadurch gekennzeichnet, dass**, wenn die Auflösung eines aktuellen Bilds 3840x2160 ist, die Pixel im zentralen Bereich des Zielbilds im Allgemeinen in Pixelbereichen 1600<x<2260 und 900<y<1260 sind, wobei x die Koordinate in Längenrichtung des Bilds ist, y die Koordinate in Breitenrichtung des Bilds ist und der Ursprung der Koordinaten der Bildanzeige in der oberen linken Ecke ist.

4. Vorrichtung zum Anpassen einer Bildqualität, umfassend:
einen Prozessor (20) und einen Speicher (21), der kommunikativ mit dem Prozessor verbunden ist, **dadurch gekennzeichnet, dass** der Speicher (21) ein Computerprogramm (22) speichert und das Computerprogramm (22), wenn es durch den Prozessor (20) ausgeführt wird, die Schritte eines Verfahrens nach einem der Ansprüche 1 bis 3 durchführt,
wobei der Prozessor (20) konfiguriert ist, um das Computerprogramm (22) in dem Speicher (21) abzurufen, um die Schritte eines Verfahrens zum Anpassen einer Bildqualität nach einem der Ansprüche 1 bis 3 durchzuführen.

## Revendications

1. Procédé d'ajustement de qualité d'image, appliqué dans un système de dispositif d'affichage, **caractérisé en ce qu'**il comprend les étapes suivantes effectuées par un processeur consistant à :
sélectionner par l'intermédiaire du système de dispositif d'affichage une zone de mise au point d'une image cible (S100) ;
utiliser une courbe de Bézier linéaire de cinquième ordre pour déterminer une courbe de relation de mise en correspondance de valeurs de luminance d'entrée et de valeurs de luminance de sortie de pixels de l'image cible (S200) ;
dans lequel la courbe de Bézier linéaire de cinquième ordre est décrite sous la forme $Lt = Ltmax \times ΣC \left(N, k\right) \times L {0}^{∧} k \times {\left(1-L0\right)}^{∧} \left(N-k\right) \times pk ,$
dans lequel C(N,k) est un coefficient binominal indiquant des permutations de k éléments parmi N avec N = 5 éléments, Ltmax représente une luminance de sortie maximale prise en charge par le système de dispositif d'affichage, L0 représente un rapport de la valeur de luminance d'entrée à une valeur de luminance d'entrée maximale, k itère de 1 à 5, et pk représente une séquence de coefficients, dans lequel, avec des coefficients initiaux étant pk=k/5, cinq intervalles égaux de 0 à p1, p1 à p2, p2 à p3, p3 à p4 et p4 à p5 sont définis,
calculer une plage de valeurs de luminance d'entrée de pixels dans la zone de mise au point de l'image cible et déterminer une valeur de limite supérieure et une valeur de limite inférieure de la plage de luminance d'entrée ;
déterminer un coefficient initial supérieur d'un intervalle des cinq intervalles égaux, dans lequel se trouve la valeur de limite supérieure, en tant que coefficient de bord supérieur et un coefficient initial inférieur d'un intervalle des cinq intervalles égaux, dans lequel se trouve la valeur de limite inférieure, en tant que coefficient de bord inférieur ;
augmenter le coefficient de bord supérieur pour obtenir un nouveau coefficient de bord supérieur en multipliant le coefficient de bord supérieur par un facteur d'ajustement et réduire le coefficient de bord inférieur pour obtenir un nouveau coefficient de bord inférieur en divisant le coefficient de bord inférieur par le facteur de mise à l'échelle ;
ajuster les pixels dans la zone de mise au point de l'image cible en appliquant la courbe de Bézier linéaire de cinquième ordre avec les nouveaux coefficients de bord inférieur et supérieur pour mettre en correspondance les valeurs de luminance d'entrée de la zone de mise au point de l'image cible avec les valeurs de luminance de sortie.

2. Procédé d'ajustement de qualité d'image selon la revendication 1, **caractérisé en ce que** la zone de mise au point de l'image cible sélectionnée par le système de dispositif d'affichage est une zone centrale dans un affichage d'image de l'image cible.

3. Procédé d'ajustement de qualité d'image selon la revendication 2, **caractérisé en ce que** lorsque la résolution d'une image actuelle est de 3840 × 2160, les pixels dans la zone centrale de l'image cible sont généralement situés dans des plages de pixels de 1 600<x<2 260 et 900<y<1260, où x est la coordonnée dans la direction de la longueur de l'image, y est la coordonnée dans la direction de la largeur de l'image et l'origine des coordonnées de l'affichage d'image se trouve dans le coin supérieur gauche.

4. Dispositif d'ajustement de qualité d'image, comprenant :
un processeur (20) et une mémoire (21) connectée en communication au processeur, **caractérisé en ce que** la mémoire (21) stocke un programme informatique (22), et le programme informatique (22), lorsqu'il est exécuté par le processeur (20), exécute les étapes du procédé selon l'une quelconque des revendications 1 à 3,
dans lequel le processeur (20) est configuré pour appeler le programme informatique (22) dans la mémoire (21) afin d'exécuter les étapes du procédé d'ajustement de qualité d'image selon l'une quelconque des revendications 1 à 3.
